# EUROPEAN PATENT APPLICATION

(11) **EP 2 819 289 A2**
(43) Date of publication of application: **31.12.2014**
(21) Application number: 14173849.2
(22) Date of filing: 25.06.2014
(51) Int. Cl.: H02M 3/156

(54) **Boost type direct current output control circuit device controlled by subpower**

(30) Priority: 26.06.2013 US 201313927247
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(57) **Abstract**

The present invention is to utilize the partial electric energy of a direct current power source for being converted through an electric control unit (ECU101) into alternating polarity electric energy or ripple electric energy, and through a full wave rectifier for generating a direct current auxiliary power source, so as to form a voltage accumulation with the direct current power source, and a direct current output terminal is served to output the boosted direct current electric energy, thus a full power transformer is not required.

## Description

### BACKGROUND OF THE INVENTION

### (a) Field of the Invention

The present invention is to utilize the partial electric energy of a direct current power source for being converted through an electric control unit (ECU101) into alternating polarity electric energy or ripple electric energy so as to be transferred to the primary side of a transformer, the alternating polarity electric energy or ripple electric energy outputted from the secondary side of the transformer is converted through a full wave rectifier for generating a direct current auxiliary power source, so the direct current auxiliary power source is enabled to form a serial voltage accumulation with the direct current power source of a direct current input terminal (INPT101), and a direct current output terminal (OUPT102) is served to output the boosted direct current electric energy, thus the transformer only needs to supply the power for boosting, so a full power transformer is not required thereby reducing the weight and production cost.

### (b) Description of the Prior Art

For a conventional voltage boosting performed by the direct current power source, the direct current has to be converted into alternating polarity electric energy first, and then a full power transformer is utilized for enabling the alternating polarity electric energy to be boosted so as to output with relatively higher voltage, then is rectified to the direct current electric energy for achieving the direct current boosting effect, however the prior art has following disadvantages: the volume and the weight of the full power transformer are relatively larger and heavier, the production cost is increased and the iron loss is also increased.

### SUMMARY OF THE INVENTION

The present invention is to utilize the partial electric energy of a direct current power source for being converted through an electric control unit (ECU101) into alternating polarity electric energy or ripple electric energy so as to be transferred to the primary side of a transformer, the alternating polarity electric energy or ripple electric energy outputted from the secondary side of the transformer is converted though a full wave rectifier for generating a direct current auxiliary power source, so the direct current auxiliary power source is enabled to form a serial voltage accumulation with the direct current power source of a direct current input terminal (INPT101), and a direct current output terminal (OUPT102) is served to output the boosted direct current electric energy, thus the transformer only needs to supply the power for boosting, so a full power transformer is not required thereby reducing the weight and production cost.

The boost type direct current output control circuit device controlled by partial power of the present invention is to be applied in the direct current power supply with single voltage output having no voltage regulating function or regulative voltage output, or single voltage stabilizing output or regulative voltage stabilizing output, which includes being applied in a device required the input of direct current electric energy such as a power supply for electric recharger with controllable voltage and current, applied in a DC to DC converter in which the direct current power being boosted for DC output, applied in regulating the speed and/or torque of the DC brush or brushless motor in which the driving being varied through regulating voltage and current, applied in the lighting adjustment of an illumination lamp utilizing electric energy being converted into photo energy, applied in the power supply for adjusting temperature of an electric heating device, applied in the power supply for a device having electrochemical function, and applied in the power supply for direct current welding or direct current electricity discharging.

According to a second aspect of the invention, a boost type direct current output control circuit device comprises: a direct current input terminal (INPT101); an electric control unit (ECU101) arranged to convert direct current electric energy from the input terminal (INPT101) into alternating polarity electric energy; a transformer (TR101) having primary windings (W1) arranged to receive the alternating polarity electric energy from the electric control unit (ECU101) and secondary windings (W2) for outputting the alternating polarity electric energy with a relative set transformation ratio; a bridge rectifier (BR101) for receiving alternating polarity electric energy from the secondary windings (W2) having an auxiliary direct current output terminal (T3); a diode (CR101) connected across the direct current output end of the bridge rectifier (BR101); and an output terminal (OUPT102); wherein the current input end of the diode (CR101) is connected to the output negative polarity of the bridge rectifier (BR101), and the output end of the diode (CR101) is connected to the output positive polarity of the bridge rectifier (BR101), thereby enabling the direct current power source to be forwardly connected in serial with the direct current auxiliary power source and the direct current output terminal (OUPT102) to output a boosted voltage of the accumulated voltages of the two power sources so a partial power voltage controlling type direct current output driving circuit is established.

### BRIEF DESCRIPTION OF THE DRAWINGS

FIG. 1 is a block diagram showing the main circuit and components according to the present invention.
FIG. 2 is a schematic view showing the equivalent circuit with boosting function according to the present invention.
FIG. 3 is a circuit block diagram illustrating a ripple suppress circuit device being installed in FIG. 1 according to one embodiment of the present invention.
FIG. 4 is a circuit block diagrams illustrating the direct current output terminal (OUPT102) shown in FIG. 1 being installed with an electric energy detector, according to one embodiment of the present invention.
FIG. 5 is a circuit block diagrams illustrating FIG. 1 being installed with the ripple suppress circuit device and the direct current output terminal (OUPT102) being installed with the electric energy detector, according to one embodiment of the present invention.
FIG. 6 is a circuit block diagram illustrating the embodiment disclosed in FIG. 1 being installed with an input operation device (IPD101) for controlling the electric control unit (ECU101) so as to control the output voltage of the direct current output terminal (OUPT102).
FIG. 7 is a circuit block diagram illustrating the embodiment disclosed in FIG. 3 being installed with an input operation device (IPD101) for controlling the electric control unit (ECU101) so as to control the output voltage of the direct current output terminal (OUPT102).
FIG. 8 is a circuit block diagram illustrating the embodiment disclosed in FIG. 4 being installed with an input operation device (IPD101) for controlling the electric control unit (ECU101) so as to control the output voltage of the direct current output terminal (OUPT102).
FIG. 9 is a circuit block diagram illustrating the embodiment disclosed in FIG. 5 being installed with an input operation device (IPD101) for controlling the electric control unit (ECU101) so as to control the output voltage of the direct current output terminal (OUPT102).

### DESCRIPTION OF MAIN COMPONENT SYMBOLS

BR101 : Bridge rectifier
CR101 : Diode
ECU101 : Electric control unit
ID 100 : Current detector
IPD101 : Input operation device
INPT101 : Direct current input terminal
OUPT102 : Direct current output terminal
RFC 100 RFC200 : Ripple suppress circuit device
T3 : Auxiliary direct current output terminal
TR101 : Transformer
VD100 : Voltage detector
W1 : Primary windings
W2 : Secondary windings

### DETAILED DESCRIPTION OF THE PREFERRED EMBODIMENTS

For a conventional voltage boosting performed by the direct current power source, the direct current has to be converted into alternating polarity electric energy first, and then a full power transformer is utilized for enabling the alternating polarity electric energy to be boosted so as to output with relatively higher voltage, then is rectified to the direct current electric energy for achieving the direct current boosting effect, however the prior art has following disadvantages: the volume and the weight of the full power transformer are relatively larger and heavier, the production cost is increased and the iron loss is also increased.

The present invention is to utilize the partial electric energy of a direct current power source for being converted through an electric control unit (ECU101) into alternating polarity electric energy or ripple electric energy so as to be transferred to the primary side of a transformer, the alternating polarity electric energy or ripple electric energy outputted from the secondary side of the transformer is converted though a full wave rectifier for generating a direct current auxiliary power source, so the direct current auxiliary power source is enabled to form a serial voltage accumulation with the direct current power source of a direct current input terminal (INPT101), and a direct current output terminal (OUPT102) is served to output the boosted direct current electric energy, thus the transformer only needs to supply the power for boosting, so a full power transformer is not required thereby reducing the weight and production cost.

The boost type direct current output control circuit device controlled by partial power of the present invention is to be applied in the direct current power supply with single voltage output having no voltage regulating function or regulative voltage output, or single voltage stabilizing output or regulative voltage stabilizing output, which includes being applied in a device required the input of direct current electric energy such as a power supply for electric recharger with controllable voltage and current, applied in a DC to DC converter in which the direct current power being boosted for DC output, applied in regulating the speed and/or torque of the DC brush or brushless motor in which the driving being varied through regulating voltage and current, applied in the lighting adjustment of an illumination lamp utilizing electric energy being converted into photo energy, applied in the power supply for adjusting temperature of an electric heating device, applied in the power supply for a device having electrochemical function, and applied in the power supply for direct current welding or direct current electricity discharging.

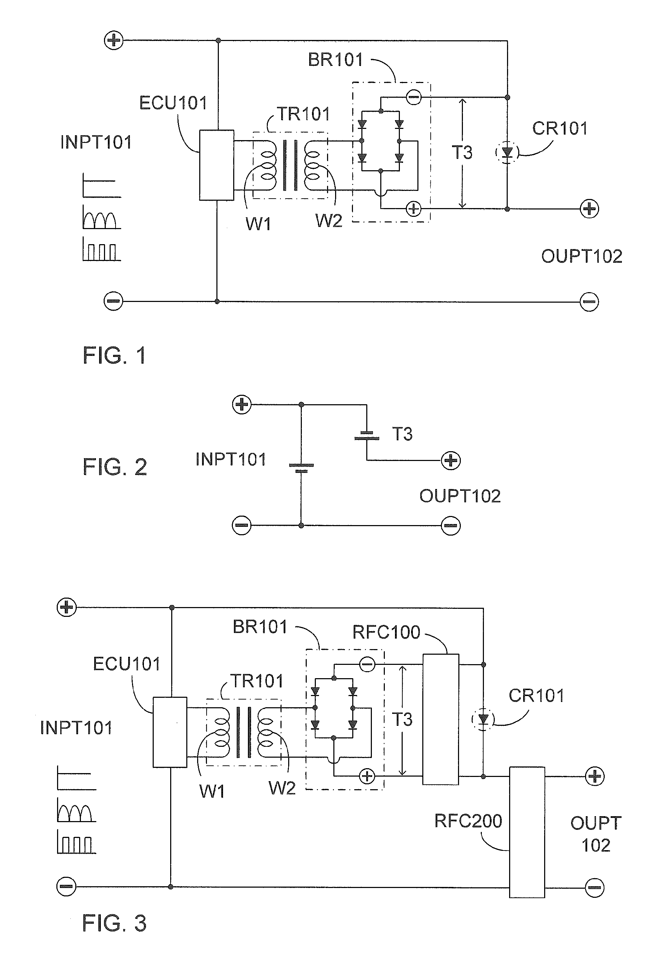

FIG. 1 is a block diagram showing the main circuit components according to the present invention;

As shown in FIG. 1, consists of:
--Electric control unit (ECU101): consists of electromechanical elements and/or solid-state electric elements and/or microprocessors and/or relevant software, used for converting the direct current electric energy inputted through the direct current input terminal (INPT101) into the alternating polarity electric energy for being transmitted to a primary windings (W1) of a transformer (TR101), and a secondary windings (W2) of the transformer (TR101) is served to output the alternating polarity electric energy with a relative set transformation ratio, the alternating polarity electric energy is transmitted through the direct current output end of a bridge rectifier (BR101) to an auxiliary direct current output terminal (T3); the direct current input terminal (INPT101) is inputted to the positive polarity of the electric control unit (ECU101), and is connected to the negative polarity of the direct current auxiliary power source then outputted from the positive polarity of the direct current auxiliary power source to the positive polarity of the direct current output terminal (OUPT102), while the negative polarity of the direct current input terminal (INPT101) is leaded to the negative polarity of the electric control unit (ECU101), and leaded to the negative polarity of the direct current output terminal (OUPT102); a diode (CR101) having bypass function is connected in parallel between the positive polarity and the negative polarity of the direct current auxiliary power source, the current input end of the diode (CR101) is leaded to the output negative polarity of the bridge rectifier (BR101), the output end of the diode (CR101) is leaded to the output positive polarity of the bridge rectifier (BR101), thereby enabling the direct current power source to be forwardly connected in serial with the direct current auxiliary power source and the direct current output terminal (OUPT102) to be served for outputting the boosted voltage of the accumulated voltages of the above two power sources, so a partial power voltage controlling type direct current output driving circuit is established.

FIG. 2 is a schematic view showing the equivalent circuit with boosting function according to the present invention.

As shown in FIG. 2, the direct current voltage inputted through the direct current input terminal (INPT101) and the direct current voltage outputted by the secondary side of the transformer (TR101) and rectified by the bridge rectifier (BR101) are forwardly connected in serial, the two voltages are accumulated for being boosted and outputted from the direct current output terminal (OUPT102).

FIG. 3 is a circuit block diagram illustrating a ripple suppress circuit device being installed in FIG. 1 according to one embodiment of the present invention;

As shown in FIG. 3, according to the main circuit shown in FIG. 1, further including the auxiliary direct current output terminal (T3) of the bridge rectifier (BR101) being connected in parallel with a ripple suppress circuit device (RFC100) and/or two ends of the direct current output terminal (OUPT102) being connected in parallel with a ripple suppress circuit device (RFC200), thereby reducing the ripple of the auxiliary direct current electric energy.

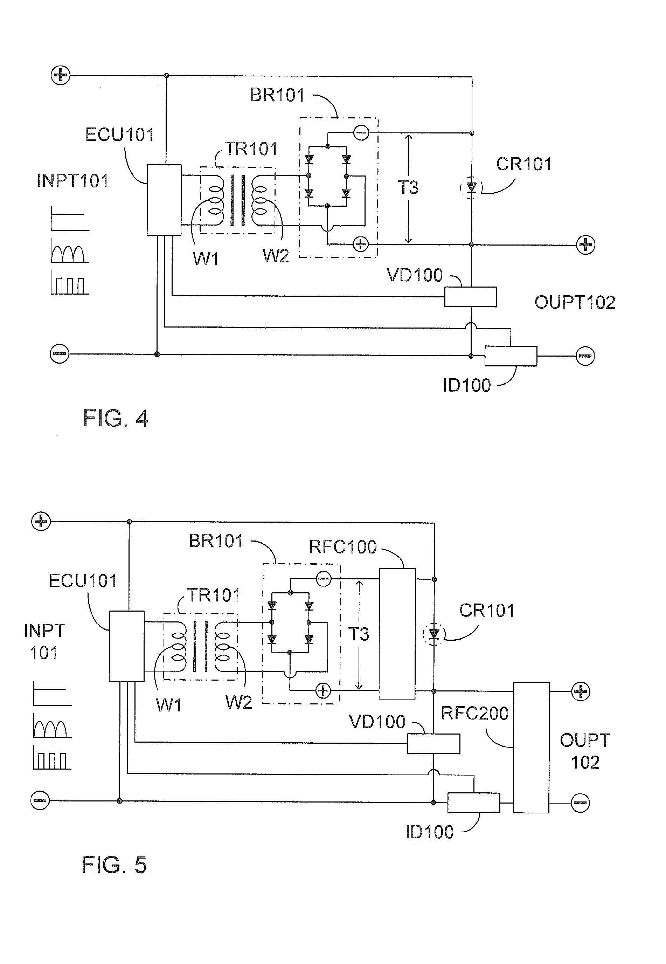

FIG. 4 is a circuit block diagrams illustrating the direct current output terminal (OUPT102) shown in FIG. 1 being installed with an electric energy detector, according to one embodiment of the present invention;

As shown in FIG. 4, according to the main circuit show in FIG. 1, the direct current output terminal (OUPT102) is installed with an electric energy detector, the electric energy detector includes a voltage detector (VD100) and/or a current detector (ID100), one or both of the detectors are served to display the voltage and/or the current and/or to feedback detecting signals to the electric control unit (ECU101), thereby enabling the input electric energy from the electric control unit (ECU101) to the primary windings (W1) of the transformer (TR101) to be controlled with respect to the output voltage and/or output current mode set through the electric control unit (ECU101), so the output voltage and/or output current of the auxiliary direct current output terminal (T3) can be regulated, and the output voltage and/or current of the direct current output terminal (OUPT102) can be correspondingly varied.

FIG. 5 is a circuit block diagrams illustrating FIG. 1 being installed with the ripple suppress circuit device and the direct current output terminal (OUPT102) being installed with the electric energy detector, according to one embodiment of the present invention;

As shown in FIG. 5, according to the main circuit show in FIG. 1, the auxiliary direct current output terminal (T3) of the bridge rectifier (BR101) is connected in parallel with the ripple suppress circuit device (RFC100) and/or two ends of the direct current output terminal (OUPT102) are connected in parallel with the ripple suppress circuit device (RFC200), the direct current output terminal (OUPT102) is installed with an electric energy detector, the electric energy detector includes a voltage detector (VD100) and/or a current detector (ID100), one or both of the detectors are served to display the voltage and/or the current and/or to feedback detecting signals to the electric control unit (ECU101), thereby enabling the input electric energy from the electric control unit (ECU101) to the primary windings (W1) of the transformer (TR101) to be controlled with respect to the output voltage and/or output current mode set through the electric control unit (ECU101), so the output voltage and/or output current of the auxiliary direct current output terminal (T3) can be controlled, and the output voltage and/or current of the direct current output terminal (OUPT102) can be correspondingly varied.

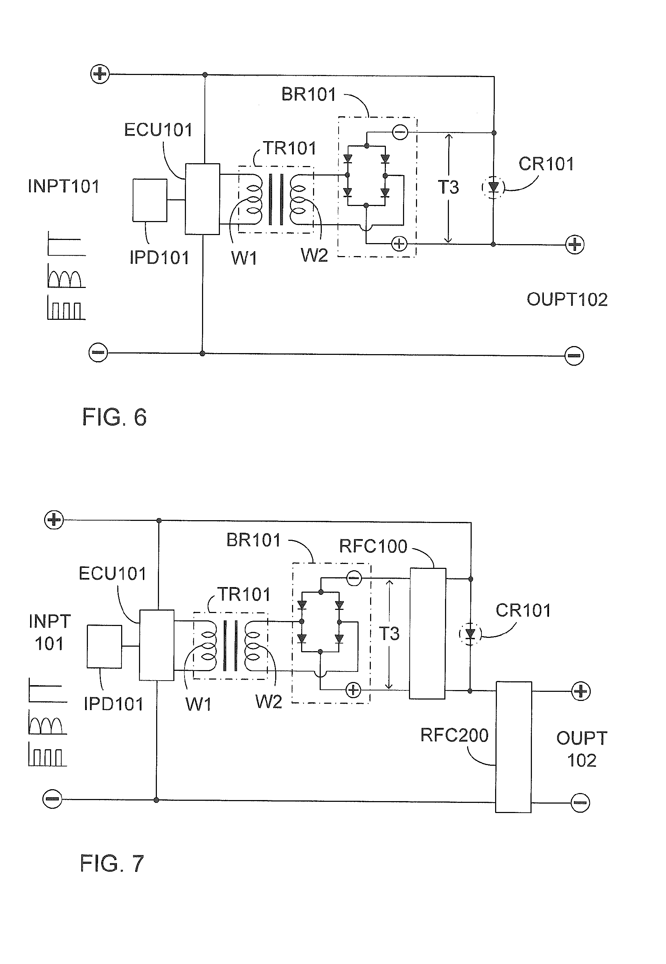

FIG. 6 is a circuit block diagram illustrating the embodiment disclosed in FIG. 1 being installed with an input operation device (IPD101) for controlling the electric control unit (ECU101) so as to control the output voltage of the direct current output terminal (OUPT102);

As shown in FIG. 6, the main circuit shown in FIG. 1 is provided and further includes:
--Input operation device (IPD101): consists of electromechanical elements or solid-state electric elements, controlled by manual operation or controlled by external electric signals for transferring corresponding signals to the electric control unit (ECU101);
--Electric control unit (ECU101): consists of electromechanical elements and/or solid-state electric elements and/or microprocessors and/or relevant software, controlled by the input operation device (IPD101), used for converting the direct current electric energy inputted through the direct current input terminal (INPT101) into the alternating polarity electric energy for being transmitted to a primary windings (W1) of a transformer (TR101), and a secondary windings (W2) of the transformer (TR101) is served to output the alternating polarity electric energy with a relative set transformation ratio, the alternating polarity electric energy is transferred through the direct current output end of a bridge rectifier (BR101) to an auxiliary direct current output terminal (T3); the direct current input terminal (INPT101) is inputted to the positive polarity of the electric control unit (ECU101), and is connected to the negative polarity of the direct current auxiliary power source then outputted from the positive polarity of the direct current auxiliary power source to the positive polarity of the direct current output terminal (OUPT102), while the negative polarity of the direct current input terminal (INPT101) is leaded to the negative polarity of the electric control unit (ECU101), and leaded to the negative polarity of the direct current output terminal (OUPT102); a diode (CR101) having bypass function is connected in parallel between the positive polarity and the negative polarity of the direct current auxiliary power source, the current input end of the diode (CR101) is leaded to the output negative polarity of the bridge rectifier (BR101), the output end of the diode (CR101) is leaded to the output positive polarity of the bridge rectifier (BR101), thereby enabling the direct current power source to be forwardly connected in serial with the direct current auxiliary power source and the direct current output terminal (OUPT102) to be served for outputting the boosted voltage of the accumulated voltages of the above two power sources, so a partial power voltage controlling type direct current output driving circuit is established.

FIG. 7 is a circuit block diagram illustrating the embodiment disclosed in FIG. 3 being installed with an input operation device (IPD101) for controlling the electric control unit (ECU101) so as to control the output voltage of the direct current output terminal (OUPT102);

As shown in FIG. 7, the main circuit shown in FIG. 3 is provided and further includes:
--Input operation device (IPD101): consists of electromechanical elements or solid-state electric elements, controlled by manual operation or controlled by external electric signals for transferring corresponding signals to the electric control unit (ECU101);
--Electric control unit (ECU101): consists of electromechanical elements and/or solid-state electric elements and/or microprocessors and/or relevant software, controlled by the input operation device (IPD101), used for converting the direct current electric energy inputted through the direct current input terminal (INPT101) into the alternating polarity electric energy for being transmitted to a primary windings (W1) of a transformer (TR101), and a secondary windings (W2) of the transformer (TR101) is served to output the alternating polarity electric energy with a relative set transformation ratio, the alternating polarity electric energy is transmitted through the direct current output end of a bridge rectifier (BR101) to an auxiliary direct current output terminal (T3); the direct current input terminal (INPT101) is inputted to the positive polarity of the electric control unit (ECU101), and is connected to the negative polarity of the direct current auxiliary power source then outputted from the positive polarity of the direct current auxiliary power source to the positive polarity of the direct current output terminal (OUPT102), while the negative polarity of the direct current input terminal (INPT101) is leaded to the negative polarity of the electric control unit (ECU101), and leaded to the negative polarity of the direct current output terminal (OUPT102); a diode (CR101) having bypass function is connected in parallel between the positive polarity and the negative polarity of the direct current auxiliary power source, the current input end of the diode (CR101) is leaded to the output negative polarity of the bridge rectifier (BR101), the output end of the diode (CR101) is leaded to the output positive polarity of the bridge rectifier (BR101), thereby enabling the direct current power source to be forwardly connected in serial with the direct current auxiliary power source and the direct current output terminal (OUPT102) to be served for outputting the boosted voltage of the accumulated voltages of the above two power sources, so a partial power voltage controlling type direct current output driving circuit is established;

The auxiliary direct current output terminal (T3) of the bridge rectifier (BR101) is connected in parallel with the ripple suppress circuit device (RFC100) and/or two ends of the direct current output terminal (OUPT102) are connected in parallel with the ripple suppress circuit device (RFC200).

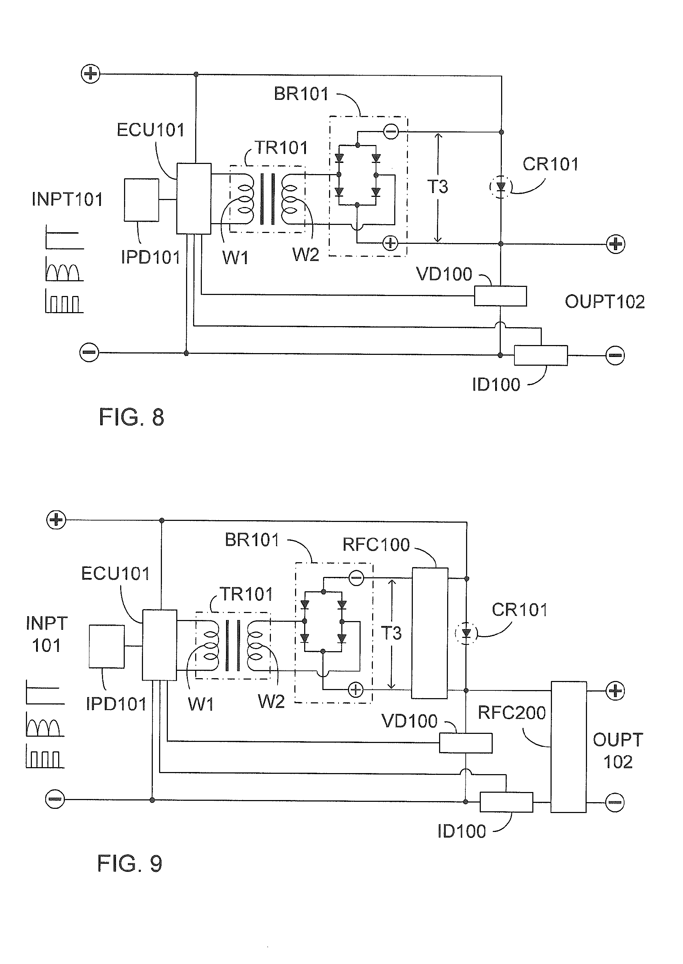

FIG. 8 is a circuit block diagram illustrating the embodiment disclosed in FIG. 4 being installed with an input operation device (IPD101) for controlling the electric control unit (ECU101) so as to control the output voltage of the direct current output terminal (OUPT102);

As shown in FIG. 8, the main circuit shown in FIG. 4 is provided and further includes:
--Input operation device (IPD101): consists of electromechanical elements or solid-state electric elements, controlled by manual operation or controlled by external electric signals for transferring corresponding signals to the electric control unit (ECU101);
--Electric control unit (ECU101): consists of electromechanical elements and/or solid-state electric elements and/or microprocessors and/or relevant software, controlled by the input operation device (IPD101), used for converting the direct current electric energy inputted through the direct current input terminal (INPT101) into the alternating polarity electric energy for being transmitted to a primary windings (W1) of a transformer (TR101), and a secondary windings (W2) of the transformer (TR101) is served to output the alternating polarity electric energy with a relative set transformation ratio, the alternating polarity electric energy is transmitted through the direct current output end of a bridge rectifier (BR101) to an auxiliary direct current output terminal (T3); the direct current input terminal (INPT101) is inputted to the positive polarity of the electric control unit (ECU101), and is connected to the negative polarity of the direct current auxiliary power source then outputted from the positive polarity of the direct current auxiliary power source to the positive polarity of the direct current output terminal (OUPT102), while the negative polarity of the direct current input terminal (INPT101) is leaded to the negative polarity of the electric control unit (ECU101), and leaded to the negative polarity of the direct current output terminal (OUPT102); a diode (CR101) having bypass function is connected in parallel between the positive polarity and the negative polarity of the direct current auxiliary power source, the current input end of the diode (CR101) is leaded to the output negative polarity of the bridge rectifier (BR101), the output end of the diode (CR101) is leaded to the output positive polarity of the bridge rectifier (BR101), thereby enabling the direct current power source to be forwardly connected in serial with the direct current auxiliary power source and the direct current output terminal (OUPT102) to be served for outputting the boosted voltage of the accumulated voltages of the above two power sources, so a partial power voltage controlling type direct current output driving circuit is established;

And the direct current output terminal (OUPT102) is installed with the electric energy detector, the electric energy detector includes the voltage detector (VD100) and/or the current detector (ID100), one or both of the detectors are served to display the voltage and/or the current and/or to feedback detecting signals to the electric control unit (ECU101), thereby enabling the input electric energy from the electric control unit (ECU101) to the primary windings (W1) of the transformer (TR101) to be controlled with respect to the output and/or output voltage and current mode set through the electric control unit (ECU101), so the output voltage and/or output current of the auxiliary direct current output terminal (T3) can be regulated, and the output voltage and/or current of the direct current output terminal (OUPT102) can be correspondingly varied.

FIG. 9 is a circuit block diagram illustrating the embodiment disclosed in FIG. 5 being installed with an input operation device (IPD101) for controlling the electric control unit (ECU101) so as to control the output voltage of the direct current output terminal (OUPT102);

As shown in FIG. 9, the main circuit shown in FIG. 5 is provided and further includes:
--Input operation device (IPD 101): consists of electromechanical elements or solid-state electric elements, controlled by manual operation or controlled by external electric signals for transferring corresponding signals to the electric control unit (ECU101);
--Electric control unit (ECU101): consists of electromechanical elements and/or solid-state electric elements and/or microprocessors and/or relevant software, controlled by the input operation device (IPD101), used for converting the direct current electric energy inputted through the direct current input terminal (INPT101) into the alternating polarity electric energy for being transmitted to a primary windings (W1) of a transformer (TR101), and a secondary windings (W2) of the transformer (TR101) is served to output the alternating polarity electric energy with a relative set transformation ratio, the alternating polarity electric energy is transmitted through the direct current output end of a bridge rectifier (BR101) to an auxiliary direct current output terminal (T3); the direct current input terminal (INPT101) is inputted to the positive polarity of the electric control unit (ECU101), and is connected to the negative polarity of the direct current auxiliary power source then outputted from the positive polarity of the direct current auxiliary power source to the positive polarity of the direct current output terminal (OUPT102), while the negative polarity of the direct current input terminal (INPT101) is leaded to the negative polarity of the electric control unit (ECU101), and leaded to the negative polarity of the direct current output terminal (OUPT102); a diode (CR101) having bypass function is connected in parallel between the positive polarity and the negative polarity of the direct current auxiliary power source, the current input end of the diode (CR101) is leaded to the output negative polarity of the bridge rectifier (BR101), the output end of the diode (CR101) is leaded to the output positive polarity of the bridge rectifier (BR101), thereby enabling the direct current power source to be forwardly connected in serial with the direct current auxiliary power source and the direct current output terminal (OUPT102) to be served for outputting the boosted voltage of the accumulated voltages of the above two power sources, so a partial power voltage controlling type direct current output driving circuit is established;

And the direct current output terminal (OUPT102) is installed with the electric energy detector, the electric energy detector includes the voltage detector (VD100) and/or the current detector (ID100), one or both of the detectors are served to display the voltage and/or the current and/or to feedback detecting signals to the electric control unit (ECU101), thereby enabling the input electric energy from the electric control unit (ECU101) to the primary windings (W1) of the transformer (TR101) to be controlled with respect to the output voltage and/or output current mode set through the electric control unit (ECU101), so the output voltage and/or output current of the auxiliary direct current output terminal (T3) can be regulated, and the output voltage and/or current of the direct current output terminal (OUPT102) can be correspondingly varied;

The auxiliary direct current output terminal (T3) of the bridge rectifier (BR101) is connected in parallel with the ripple suppress circuit device (RFC100) and/or two ends of the direct current output terminal (OUPT102) are connected in parallel with the ripple suppress circuit device (RFC200).

The mentioned electric energy detector includes:
--Voltage detector (VD100): consists of a voltage detector utilizing the physical effect, converting the varied voltage values into analog or digital signals for being transmitted to the electric control unit (ECU101) or further being displayed;
--Current detector (ID100): consists of a current detector utilizing the physical effect, converting the varied current values into analog or digital signals for being transmitted to the electric control unit (ECU101) or further being displayed;

As shown from FIG. 5 and FIG. 9, the electric energy detector through the feedback signals of the voltage detector (VD100) and/or the current detector (ID100) for controlling and regulating the input electric energy of the primary windings (W1) of the transformer (TR101) with respect to the output voltage and/or current mode includes one or more than one of following controlling functions:
(1) Through the operation of the current detector (ID100) and/or the manual control of the input operation device (IPD101) and/or the operation of the electric control unit (ECU101), the value of the output current is controlled, including the control of limiting the maximum output current;
(2) Through the operation of the current detector (ID100) and/or the manual control of the input operation device (IPD101) and/or the operation of the electric control unit (ECU101), the output current can be controlled as constant or regulative constant current;
(3) Through the operation of the current detector (ID100) and/or the manual control of the input operation device (IPD101) and/or the operation of the electric control unit (ECU101), the value of output current is provided with multi-variable control such as an electric charging mode;
(4) Through the operation of the voltage detector (VD100) and/or the manual control of the input operation device (IPD101) and/or the operation of the electric control unit (ECU101), the value of output voltage can be controlled, including the control of limiting the maximum voltage output;
(5) Through the operation of the voltage detector (VD100) and/or the manual control of the input operation device (IPD101) and/or the operation of the electric control unit (ECU101), the output voltage can be controlled as constant or regulative constant voltage;
(6) Through the operation of the voltage detector (VD100) and/or the manual control of the input operation device (IPD101) and/or the operation of the electric control unit (ECU101), the value of output voltage is provided with multi-variable control such as an electric charging mode;

According to the boost type direct current output control circuit device controlled by partial power, the direct current power source includes various physical direct current power sources, e.g. the electromechanical generator driven by mechanical energy or manual force or hydraulic energy, or a photovoltaic utilizing photo energy being converted into electric energy, or electrochemical direct current electric energy, e.g. a primary battery or a secondary storing or discharging battery, fuel cell device, or a bio direct current electric energy, or the constant voltage rectified by the alternative current power source or the direct current electric energy of variable power source.

## Claims

1. A boost type direct current output control circuit device controlled by subpower, which is applied in the direct current power supply with single voltage output having no voltage regulating function or regulative voltage output, or single voltage stabilizing output or regulative voltage stabilizing output, which includes being applied in a device required the input of direct current electric energy such as a power supply for electric recharger with controllable voltage and current, applied in a DC to DC converter in which the direct current power being boosted for DC output, applied in regulating the speed and/or torque of the DC brush or brushless motor in which the driving being varied through regulating voltage and current, applied in the lighting adjustment of an illumination lamp utilizing electric energy being converted into photo energy, applied in the power supply for adjusting temperature of an electric heating device, applied in the power supply for a device having electrochemical function, and applied in the power supply for direct current welding or direct current electricity discharging, wherein it consists of:
--Electric control unit (ECU101): consists of electromechanical elements and/or solid-state electric elements and/or microprocessors and/or relevant software, used for converting the direct current electric energy inputted through the direct current input terminal (INPT101) into the alternating polarity electric energy for being transmitted to a primary windings (W1) of a transformer (TR101), and a secondary windings (W2) of the transformer (TR101) is served to output the alternating polarity electric energy with a relative set transformation ratio, the alternating polarity electric energy is transmitted through the direct current output end of a bridge rectifier (BR101) to an auxiliary direct current output terminal (T3); the direct current input terminal (INPT101) is inputted to the positive polarity of the electric control unit (ECU101), and is connected to the negative polarity of the direct current auxiliary power source then outputted from the positive polarity of the direct current auxiliary power source to the positive polarity of the direct current output terminal (OUPT102), while the negative polarity of the direct current input terminal (INPT101) is leaded to the negative polarity of the electric control unit (ECU101), and leaded to the negative polarity of the direct current output terminal (OUPT102); a diode (CR101) having bypass function is connected in parallel between the positive polarity and the negative polarity of the direct current auxiliary power source, the current input end of the diode (CR101) is leaded to the output negative polarity of the bridge rectifier (BR101), the output end of the diode (CR101) is leaded to the output positive polarity of the bridge rectifier (BR101), thereby enabling the direct current power source to be forwardly connected in serial with the direct current auxiliary power source and the direct current output terminal (OUPT102) to be served for outputting the boosted voltage of the accumulated voltages of the above two power sources, so a partial power voltage controlling type direct current output driving circuit is established.

2. A boost type direct current output control circuit device controlled by subpower as claimed in claim 1, wherein further including the auxiliary direct current output terminal (T3) of the bridge rectifier (BR101) being connected in parallel with a ripple suppress circuit device (RFC100) and/or two ends of the direct current output terminal (OUPT102) being connected in parallel with a ripple suppress circuit device (RFC200), thereby reducing the ripple of the auxiliary direct current electric energy.

3. A boost type direct current output control circuit device controlled by subpower as claimed in claim 1, wherein the direct current output terminal (OUPT102) is installed with an electric energy detector, the electric energy detector includes a voltage detector (VD100) and/or a current detector (ID100), one or both of the detectors are served to display the voltage and/or the current and/or to feedback detecting signals to the electric control unit (ECU101), thereby enabling the input electric energy from the electric control unit (ECU101) to the primary windings (W1) of the transformer (TR101) to be controlled with respect to the output voltage and/or output current mode set through the electric control unit (ECU101), so the output voltage and/or output current of the auxiliary direct current output terminal (T3) can be regulated, and the output voltage and/or current of the direct current output terminal (OUPT102) can be correspondingly varied.

4. A boost type direct current output control circuit device controlled by subpower as claimed in claim 1, wherein the auxiliary direct current output terminal (T3) of the bridge rectifier (BR101) is connected in parallel with the ripple suppress circuit device (RFC100) and/or two ends of the direct current output terminal (OUPT102) are connected in parallel with the ripple suppress circuit device (RFC200), the direct current output terminal (OUPT102) is installed with an electric energy detector, the electric energy detector includes a voltage detector (VD100) and/or a current detector (ID100), one or both of the detectors are served to display the voltage and/or the current and/or to feedback detecting signals to the electric control unit (ECU101), thereby enabling the input electric energy from the electric control unit (ECU101) to the primary windings (W1) of the transformer (TR101) to be controlled with respect to the output voltage and/or output current mode set through the electric control unit (ECU101), so the output voltage and/or output current of the auxiliary direct current output terminal (T3) can be controlled, and the output voltage and/or current of the direct current output terminal (OUPT102) can be correspondingly varied.

5. A boost type direct current output control circuit device controlled by subpower as claimed in claim 1, wherein it further includes:
--Input operation device (IPD101): consists of electromechanical elements or solid-state electric elements, controlled by manual operation or controlled by external electric signals for transferring corresponding signals to the electric control unit (ECU101);
--Electric control unit (ECU101): consists of electromechanical elements and/or solid-state electric elements and/or microprocessors and/or relevant software, controlled by the input operation device (IPD101), used for converting the direct current electric energy inputted through the direct current input terminal (INPT101) into the alternating polarity electric energy for being transmitted to a primary windings (W1) of a transformer (TR101), and a secondary windings (W2) of the transformer (TR101) is served to output the alternating polarity electric energy with a relative set transformation ratio, the alternating polarity electric energy is transferred through the direct current output end of a bridge rectifier (BR101) to an auxiliary direct current output terminal (T3); the direct current input terminal (INPT101) is inputted to the positive polarity of the electric control unit (ECU101), and is connected to the negative polarity of the direct current auxiliary power source then outputted from the positive polarity of the direct current auxiliary power source to the positive polarity of the direct current output terminal (OUPT102), while the negative polarity of the direct current input terminal (INPT101) is leaded to the negative polarity of the electric control unit (ECU101), and leaded to the negative polarity of the direct current output terminal (OUPT102); a diode (CR101) having bypass function is connected in parallel between the positive polarity and the negative polarity of the direct current auxiliary power source, the current input end of the diode (CR101) is leaded to the output negative polarity of the bridge rectifier (BR101), the output end of the diode (CR101) is leaded to the output positive polarity of the bridge rectifier (BR101), thereby enabling the direct current power source to be forwardly connected in serial with the direct current auxiliary power source and the direct current output terminal (OUPT102) to be served for outputting the boosted voltage of the accumulated voltages of the above two power sources, so a partial power voltage controlling type direct current output driving circuit is established.

6. A boost type direct current output control circuit device controlled by subpower as claimed in claim 2, it further includes:
--Input operation device (IPD101): consists of electromechanical elements or solid-state electric elements, controlled by manual operation or controlled by external electric signals for transferring corresponding signals to the electric control unit (ECU101);
--Electric control unit (ECU101): consists of electromechanical elements and/or solid-state electric elements and/or microprocessors and/or relevant software, controlled by the input operation device (IPD101), used for converting the direct current electric energy inputted through the direct current input terminal (INPT101) into the alternating polarity electric energy for being transmitted to a primary windings (W1) of a transformer (TR101), and a secondary windings (W2) of the transformer (TR101) is served to output the alternating polarity electric energy with a relative set transformation ratio, the alternating polarity electric energy is transmitted through the direct current output end of a bridge rectifier (BR101) to an auxiliary direct current output terminal (T3); the direct current input terminal (INPT101) is inputted to the positive polarity of the electric control unit (ECU101), and is connected to the negative polarity of the direct current auxiliary power source then outputted from the positive polarity of the direct current auxiliary power source to the positive polarity of the direct current output terminal (OUPT102), while the negative polarity of the direct current input terminal (INPT101) is leaded to the negative polarity of the electric control unit (ECU101), and leaded to the negative polarity of the direct current output terminal (OUPT102); a diode (CR101) having bypass function is connected in parallel between the positive polarity and the negative polarity of the direct current auxiliary power source, the current input end of the diode (CR101) is leaded to the output negative polarity of the bridge rectifier (BR101), the output end of the diode (CR101) is leaded to the output positive polarity of the bridge rectifier (BR101), thereby enabling the direct current power source to be forwardly connected in serial with the direct current auxiliary power source and the direct current output terminal (OUPT102) to be served for outputting the boosted voltage of the accumulated voltages of the above two power sources, so a partial power voltage controlling type direct current output driving circuit is established;
The auxiliary direct current output terminal (T3) of the bridge rectifier (BR101) is connected in parallel with the ripple suppress circuit device (RFC100) and/or two ends of the direct current output terminal (OUPT102) are connected in parallel with the ripple suppress circuit device (RFC200).

7. A boost type direct current output control circuit device controlled by subpower as claimed in claim 3, wherein it further includes:
--Input operation device (IPD101): consists of electromechanical elements or solid-state electric elements, controlled by manual operation or controlled by external electric signals for transferring corresponding signals to the electric control unit (ECU101);
--Electric control unit (ECU101): consists of electromechanical elements and/or solid-state electric elements and/or microprocessors and/or relevant software, controlled by the input operation device (IPD101), used for converting the direct current electric energy inputted through the direct current input terminal (INPT101) into the alternating polarity electric energy for being transmitted to a primary windings (W1) of a transformer (TR101), and a secondary windings (W2) of the transformer (TR101) is served to output the alternating polarity electric energy with a relative set transformation ratio, the alternating polarity electric energy is transmitted through the direct current output end of a bridge rectifier (BR101) to an auxiliary direct current output terminal (T3); the direct current input terminal (INPT101) is inputted to the positive polarity of the electric control unit (ECU101), and is connected to the negative polarity of the direct current auxiliary power source then outputted from the positive polarity of the direct current auxiliary power source to the positive polarity of the direct current output terminal (OUPT102), while the negative polarity of the direct current input terminal (INPT101) is leaded to the negative polarity of the electric control unit (ECU101), and leaded to the negative polarity of the direct current output terminal (OUPT102); a diode (CR101) having bypass function is connected in parallel between the positive polarity and the negative polarity of the direct current auxiliary power source, the current input end of the diode (CR101) is leaded to the output negative polarity of the bridge rectifier (BR101), the output end of the diode (CR101) is leaded to the output positive polarity of the bridge rectifier (BR101), thereby enabling the direct current power source to be forwardly connected in serial with the direct current auxiliary power source and the direct current output terminal (OUPT102) to be served for outputting the boosted voltage of the accumulated voltages of the above two power sources, so a partial power voltage controlling type direct current output driving circuit is established;
And the direct current output terminal (OUPT102) is installed with the electric energy detector, the electric energy detector includes the voltage detector (VD100) and/or the current detector (ID100), one or both of the detectors are served to display the voltage and/or the current and/or to feedback detecting signals to the electric control unit (ECU101), thereby enabling the input electric energy from the electric control unit (ECU101) to the primary windings (W1) of the transformer (TR101) to be controlled with respect to the output and/or output voltage and current mode set through the electric control unit (ECU101), so the output voltage and/or output current of the auxiliary direct current output terminal (T3) can be regulated, and the output voltage and/or current of the direct current output terminal (OUPT102) can be correspondingly varied.

8. A boost type direct current output control circuit device controlled by subpower as claimed in claim 4, wherein it further includes:
--Input operation device (IPD101): consists of electromechanical elements or solid-state electric elements, controlled by manual operation or controlled by external electric signals for transferring corresponding signals to the electric control unit (ECU101);
--Electric control unit (ECU101): consists of electromechanical elements and/or solid-state electric elements and/or microprocessors and/or relevant software, controlled by the input operation device (IPD101), used for converting the direct current electric energy inputted through the direct current input terminal (INPT101) into the alternating polarity electric energy for being transmitted to a primary windings (W1) of a transformer (TR101), and a secondary windings (W2) of the transformer (TR101) is served to output the alternating polarity electric energy with a relative set transformation ratio, the alternating polarity electric energy is transmitted through the direct current output end of a bridge rectifier (BR101) to an auxiliary direct current output terminal (T3); the direct current input terminal (INPT101) is inputted to the positive polarity of the electric control unit (ECU101), and is connected to the negative polarity of the direct current auxiliary power source then outputted from the positive polarity of the direct current auxiliary power source to the positive polarity of the direct current output terminal (OUPT102), while the negative polarity of the direct current input terminal (INPT101) is leaded to the negative polarity of the electric control unit (ECU101), and leaded to the negative polarity of the direct current output terminal (OUPT102); a diode (CR101) having bypass function is connected in parallel between the positive polarity and the negative polarity of the direct current auxiliary power source, the current input end of the diode (CR101) is leaded to the output negative polarity of the bridge rectifier (BR101), the output end of the diode (CR101) is leaded to the output positive polarity of the bridge rectifier (BR101), thereby enabling the direct current power source to be forwardly connected in serial with the direct current auxiliary power source and the direct current output terminal (OUPT102) to be served for outputting the boosted voltage of the accumulated voltages of the above two power sources, so a partial power voltage controlling type direct current output driving circuit is established;
And the direct current output terminal (OUPT102) is installed with the electric energy detector, the electric energy detector includes the voltage detector (VD100) and/or the current detector (ID100), one or both of the detectors are served to display the voltage and/or the current and/or to feedback detecting signals to the electric control unit (ECU101), thereby enabling the input electric energy from the electric control unit (ECU101) to the primary windings (W1) of the transformer (TR101) to be controlled with respect to the output voltage and/or output current mode set through the electric control unit (ECU101), so the output voltage and/or output current of the auxiliary direct current output terminal (T3) can be regulated, and the output voltage and/or current of the direct current output terminal (OUPT102) can be correspondingly varied;
The auxiliary direct current output terminal (T3) of the bridge rectifier (BR101) is connected in parallel with the ripple suppress circuit device (RFC100) and/or two ends of the direct current output terminal (OUPT102) are connected in parallel with the ripple suppress circuit device (RFC200).

9. A boost type direct current output control circuit device controlled by subpower as claimed in any claim of claims 3, 4, 7, 8, wherein said electric energy detector includes:
--Voltage detector (VD100): consists of a voltage detector utilizing the physical effect, converting the varied voltage values into analog or digital signals for being transmitted to the electric control unit (ECU101) or further being displayed;
--Current detector (ID100): consists of a current detector utilizing the physical effect, converting the varied current values into analog or digital signals for being transmitted to the electric control unit (ECU101) or further being displayed; wherein
the electric energy detector through the feedback signals of the voltage detector (VD100) and/or the current detector (ID100) for controlling and regulating the input electric energy of the primary windings (W1) of the transformer (TR101) with respect to the output voltage and/or current mode includes one or more than one of following controlling functions:
1) Through the operation of the current detector (ID100) and/or the manual control of the input operation device (IPD101) and/or the operation of the electric control unit (ECU101), the value of the output current is controlled, including the control of limiting the maximum output current;
2) Through the operation of the current detector (ID100) and/or the manual control of the input operation device (IPD101) and/or the operation of the electric control unit (ECU101), the output current can be controlled as constant or regulative constant current;
3) Through the operation of the current detector (ID100) and/or the manual control of the input operation device (IPD101) and/or the operation of the electric control unit (ECU101), the value of output current is provided with multi-variable control such as an electric charging mode;
4) Through the operation of the voltage detector (VD100) and/or the manual control of the input operation device (IPD101) and/or the operation of the electric control unit (ECU101), the value of output voltage can be controlled, including the control of limiting the maximum voltage output;
5) Through the operation of the voltage detector (VD100) and/or the manual control of the input operation device (IPD101) and/or the operation of the electric control unit (ECU101), the output voltage can be controlled as constant or regulative constant voltage;
6) Through the operation of the voltage detector (VD100) and/or the manual control of the input operation device (IPD101) and/or the operation of the electric control unit (ECU101), the value of output voltage is provided with multi-variable control such as an electric charging mode.

10. A boost type direct current output control circuit device controlled by subpower as claimed in claim 1, wherein the direct current power source includes various physical direct current power sources, e.g. the electromechanical generator driven by mechanical energy or manual force or hydraulic energy, or a photovoltaic utilizing photo energy being converted into electric energy, or electrochemical direct current electric energy, e.g. a primary battery or a secondary storing or discharging battery, fuel cell device, or a bio direct current electric energy, or the constant voltage rectified by the alternative current power source or the direct current electric energy of variable power source.
